# DEMANDE DE BREVET EUROPEEN

(11) **EP 1 391 686 A1**
(43) Date de publication de la demande: **25.02.2004**
(21) Numéro de dépôt: 03291985.4
(22) Date de dépôt: 08.08.2003
(51) Int. Cl.: G01B 11/00, B60J 1/00

(54) **Procédé et dispositif de localisation par visiometrie**

(30) Priorité: 08.08.2002 FR 0210073
(71) Demandeur: Visio Nerf, 49340 Nuaille (FR)
(72) Inventeur: Robert, Pierre, 49300 Cholet (FR)
(74) Mandataire: Thibon-Littaye, Annick

(57) **Abrégé**

L'invention concerne un procédé de localisation d'un objet dans un espace tridimensionnel, suivant lequel on projette un motif de lumière géométriquement structurée en direction d'une zone à relief de l'objet, suivant une direction de projection transversale au profil du relief. On capte deux images différentes du motif en détectant la lumière réfléchie par l'objet suivant deux directions d'observation différemment inclinées par rapport à la direction de projection du motif. On repère sur chacune des images captées un élément caractéristique du relief se traduisant par une déformation du motif sur l'image. On vérifie qu'il y a concordance entre les deux images captées sur au moins une partie du motif, et dans l'affirmative on valide les coordonnées spatiales de l'élément caractéristique calculées à partir des deux images captées en tant que coordonnées de localisation de l'objet.

## Description

La présente invention concerne un procédé de localisation d'un objet par visiométrie.

Le terme objet désigne ici tout autant une entité à part entière, qu'un élément constitutif d'une pièce plus importante.

La localisation est ainsi considérée au sens large, et elle inclut la détermination non seulement de la position d'un objet, mais aussi de l'orientation dans l'espace et des dimensions d'une pièce, par l'obtention et la mise en relation des coordonnées spatiales de plusieurs des objets qui la constituent. La localisation peut ainsi être effectuée par rapport à un référentiel absolu, ou par rapport à un référentiel propre à la pièce.

Le procédé suivant l'invention utilise la technique de visiométrie, dont le principe général repose sur la génération d'une image et sur l'exploitation de cette image par des moyens de traitement du signal.

L'invention concerne également un dispositif pour la mise en oeuvre d'un tel procédé.

Le procédé et le dispositif suivant l'invention sont en particulier destinés à être utilisés dans les chaînes de montage automatisées, pour toutes les étapes au cours desquelles il est nécessaire de calculer la position d'un objet, ou de mesurer cet objet ou une de ses parties, afin par exemple de réaliser son assemblage dans une position prédéterminée avec d'autres objets ayant également été localisés, par le même procédé ou par tout autre.

L'invention trouve en particulier application dans le secteur de l'industrie automobile, mais également dans tout autre secteur dans lequel il est avantageux d'opérer par fabrication automatisée. Les principaux objectifs visés dans les chaînes de montage sont l'efficacité et la qualité des assemblages.

L'invention s'applique à tous les types et à toutes les formes d'objets. Elle utilise plus particulièrement les zones de l'objet présentant un relief, ou un contraste sur leur surface. Par relief, on entend tout élément dont la surface s'étend sur deux plans d'inclinaisons différentes. Le relief est marqué par une arête, dont le profil peut être franc ou émoussé, droit ou courbe. La zone à contraste est quant à elle définie ici comme comportant un élément qui donne une différence de luminosité sous un éclairage homogène par une lumière diffuse. Un tel élément peut être une variation de teinte sur un objet. Il est à noter qu'un trou dans un objet est traité dans le cadre de l'invention comme relevant d'une zone à contraste, et non d'une zone à relief.

Il existe des procédés de localisation d'objets faisant appel à des techniques de visiométrie qui sont actuellement utilisés dans les chaînes de montage. Ces procédés sont généralement dirigés vers une application spécifique, lourds à mettre en oeuvre, et ils manquent de versatilité.

A titre d'exemple, le brevet EP 0 280 941 décrit un procédé de mesure d'alignement des roues de voitures, qui utilise une technique de visiométrie, et qui est approprié pour une intégration dans une chaîne de montage industrielle. Ce procédé consiste à observer au moyen d'une caméra la déformation d'un motif de lumière laser projeté sur la roue, et à générer à partir de l'image formée des coordonnées concernant cette roue. ll ne s'agit pas de coordonnées en trois dimensions mais simplement de deux coordonnées dans un plan, et l'inclinaison de la roue par rapport à un plan vertical est déterminée en plus par analyse comparative de l'intensité du signal lumineux réfléchi par chaque point éclairé de la roue. Le procédé décrit par ce brevet est spécifiquement dirigé vers cette application particulière, et il ne peut être mis en oeuvre pour des problématiques différentes.

L'invention vise à fournir un procédé de localisation d'un objet utilisable dans les chaînes automatisées, qui permette de mesurer différents paramètres sur un objet donné et qui génère des résultats fiables et précis. L'invention vise également que, dans des modes de réalisation plus évolués, le dispositif pour la mise en oeuvre du procédé qu'elle propose soit conçu de telle sorte qu'une partie de ce dispositif puisse être utilisée embarquée sur un robot d'assemblage de pièces, afin de permettre la localisation par le même dispositif de différentes pièces à assembler dans une même étape de montage et situées à des endroits différents dans la chaîne.

L'invention concerne un procédé de localisation d'un objet dans un espace tridimensionnel, selon lequel on projette un motif de lumière géométriquement structurée en direction d'une zone à relief de l'objet, suivant une direction de projection transversale au profil de ce relief. On capte deux images planes du motif en détectant la lumière réfléchie par l'objet suivant deux directions d'observation différemment inclinées par rapport à la direction de projection du motif. On repère ensuite sur chacune des deux images captées un élément caractéristique du relief se traduisant par une déformation du motif sur l'image. On vérifie qu'il y a concordance entre les deux images captées sur au moins une partie du motif, et dans l'affirmative on valide les coordonnées spatiales de l'élément caractéristique calculées à partir des deux images captées en tant que coordonnées de localisation de l'objet.

La concordance entre les deux images peut être vérifiée sur la totalité du motif, ou sur une partie de ce motif seulement. Il s'agit de s'assurer que le motif de lumière observé sur chaque image, et notamment l'élément caractéristique du relief (ou un ou plusieurs des points qui le constituent) provient bien du même motif émis.

Dans des modes de réalisation préférés de l'invention, le motif projeté est constitué d'au moins un trait rectiligne, qui donne lieu à un point de déformation caractéristique du relief sur chacune des deux images.

Dans un premier niveau de vérification, on contrôle que l'intégralité du motif émis est retrouvée sur chacune des deux images. Dans le cas le plus simple où le motif de lumière structurée est composé d'un trait unique, on vérifie alors l'existence d'un point de déformation similaire sur chaque image. Dans le cas plus complexe où le motif de lumière projeté vers l'objet est constitué d'une pluralité de traits, on examine tout d'abord si on retrouve bien le même nombre de traits, et donc de points de déformation, sur les deux images. Dans l'affirmative, on décide qu'il y a concordance entre les deux images captées sur la totalité du motif. Dans le cas contraire, on vérifie s'il y a concordance sur au moins une partie de ce motif.

On se place alors dans un deuxième niveau de vérification, dans lequel on exploite la redondance d'informations générée par la combinaison de deux images différentes. Ainsi, pour au moins un trait constitutif du motif donnant lieu à un point de déformation caractéristique du relief sur chacune des deux images, on décide qu'il y a concordance entre les deux images lorsque deux jeux différents de coordonnées spatiales de ce point de déformation, calculés à partir des deux images captées, sont coïncidents. On valide alors ces coordonnées spatiales en tant que coordonnées de localisation de l'objet.

Lorsque le motif est constitué d'une pluralité de traits donnant lieu à une pluralité de points de déformation caractéristiques du relief sur chacune des images, on décide qu'il y a concordance entre les deux images lorsque pour plusieurs de ces points deux jeux différents de coordonnées spatiales, calculés à partir des deux images, sont coïncidents. On valide alors en tant que coordonnées de localisation de l'objet les coordonnées spatiales des points pour lesquels les deux jeux sont coïncidents.

L'invention assure ainsi tout à fait avantageusement qu'on puisse exploiter une redondance d'informations provenant de deux sources différentes, ce qui donne lieu à une fiabilité du résultat de la localisation d'autant plus accrue. En effet, pour chaque association de deux points provenant chacun d'une des deux images, on calcule deux jeux de coordonnées spatiales différents. Si ces deux jeux sont coïncidents, on est sûr que les deux points sont attribuables au même trait du motif, et que les deux images sont concordantes sur ce trait. Ces coordonnées spatiales peuvent alors être considérées de façon valide en tant que coordonnées de localisation de l'objet. De plus, en répétant cette opération sur plusieurs traits, on valide les coordonnées spatiales de plusieurs points caractéristiques, si bien qu'il est possible de tracer un vecteur passant par ces différents points et marquant le relief observé. On connaît alors de façon sûre non pas une, mais plusieurs informations de localisation de l'objet.

Dans des modes de réalisation préférés de l'invention, on s'assure que le motif de lumière projeté soit constitué d'un nombre de traits suffisamment important pour qu'on ait coïncidence des deux jeux de coordonnées spatiales pour assez de points de déformation pour obtenir une information de localisation riche.

L'invention prévoit également avantageusement que, dans des modes de réalisation préférés, la localisation soit mise à l'écart si on n'obtient pas concordance des deux images sur un nombre suffisant de traits constitutifs du motif de lumière, et notamment sur au moins trois de ces traits.

Suivant des modes de réalisation préférés dans la pratique industrielle, l'invention répond en outre aux caractéristiques détaillées ci-après, mises en oeuvre séparément ou en chacune de leurs combinaisons techniquement opérantes.

Dans des modes de réalisation préférés de l'invention, la lumière structurée projetée est monochromatique, de longueur d'onde donnée. Suivant une caractéristique secondaire de l'invention, on détecte alors la lumière réfléchie par l'objet après filtrage des signaux lumineux de longueur d'onde située hors d'une bande étroite encadrant la longueur d'onde de la lumière projetée. Ceci permet avantageusement d'améliorer le rapport signal/bruit de fond.

En outre, le matériel conçu pour la mise en oeuvre de l'invention permet avantageusement qu'on puisse également localiser tout objet, et même notamment lorsque les conditions de travail ne permettent pas de réaliser une détection de relief. C'est le cas par exemple lorsqu'il s'agit de localiser une vitre à assembler dans une chaîne de montage, ou tout autre objet constitué d'une matière à forte capacité de réflexion de la lumière, qui interdit l'utilisation d'un motif de lumière géométriquement structurée. Ainsi, suivant une autre caractéristique secondaire de l'invention, alternativement à la projection de lumière structurée, on éclaire d'autre part une zone à contraste de l'objet par une lumière diffuse. On capte deux images différentes de cette zone à contraste en détectant la lumière réfléchie par l'objet suivant deux directions d'observation différentes, et on détermine à partir des deux images captées la localisation du contraste.

De ce fait, en appliquant le procédé suivant l'invention, deux sortes d'images différentes peuvent être captées, suivant que l'on observe une zone à relief de l'objet sur laquelle est projeté un motif de lumière structurée, ou que l'on observe une zone à contraste de cet objet éclairée par une lumière diffuse.

L'invention concerne également un dispositif pour la mise en oeuvre du procédé qu'elle propose. Ce dispositif comporte au moins une tête optique dans laquelle est intégrée une source de lumière géométriquement structurée de longueur d'onde donnée pour projeter vers une zone à relief de l'objet à localiser un motif de cette lumière suivant une direction de projection déterminée. Cette source est notamment une source de lumière laser. Sont également intégrés dans la tête deux capteurs optiques orientés suivant des directions d'observation inclinées chacune différemment par rapport à la direction de projection du motif de lumière structurée, pour capter deux images différentes du motif réfléchi par l'objet, et deux filtres optiques placés chacun devant un des capteurs et présentant une bande passante étroite encadrant la longueur d'onde de la lumière structurée. La tête optique est associée à un dispositif d'acquisition et de traitement d'image adapté pour repérer sur chacune des images captées un élément caractéristique du relief se traduisant par une déformation du motif sur l'image, pour vérifier la concordance entre les images captées sur au moins une partie du motif, pour calculer les coordonnées spatiales de l'élément caractéristique à partir des deux images captées et pour valider automatiquement ces coordonnées spatiales en tant que coordonnées de localisation de l'objet.

Dans des modes de réalisation préférés de l'invention, le dispositif comporte une pluralité de têtes optiques associées au même dispositif d'acquisition et de traitement d'image.

Suivant une caractéristique secondaire de l'invention, la tête optique comporte en outre une source de lumière diffuse. Dans des modes de réalisation préférés de l'invention, la lumière diffuse est quasiment monochromatique et dans la même gamme de longueurs d'onde que la lumière structurée, de sorte que les filtres optiques situés devant les capteurs la laissent passer. La source de lumière diffuse est notamment une matrice de diodes.

Le même dispositif permet ainsi avantageusement de localiser d'une part des zones à relief, et d'autre part des zones à contraste. Il peut de ce fait être utilisé pour la localisation successive de plusieurs objets de configurations différentes, ce qui représente un avantage économique certain.

Dans des modes de réalisation préférés de l'invention, le dispositif est de plus associé à des moyens pour commander un robot d'assemblage de pièces dans une chaîne de montage en série automatisée.

Le dispositif suivant l'invention peut avantageusement être utilisé pour la localisation d'une pièce dans une chaîne de montage en série automatisée.

Dans des modes de réalisation préférés de l'invention, une ou plusieurs têtes optiques sont embarquées sur un robot d'assemblage de pièces. La localisation est notamment réalisée en observant successivement, à chaque fois au moyen de deux têtes optiques associées au même dispositif d'acquisition et de traitement d'image et embarquées sur le robot, deux groupes de deux zones à relief ou optionnellement de zones à contraste présentées par la pièce. Chacune des zones n'est observée que par une seule des têtes. Les zones sont avantageusement choisies de sorte que leur localisation permette d'obtenir suffisamment d'informations pour déterminer la position et les dimensions de la pièce.

L'invention concerne également un procédé de montage en série dans une chaîne automatisée de pare-brise sur des cadres de voitures, utilisant le dispositif suivant l'invention. Ce procédé comporte la répétition successive du cycle d'étapes comprenant le déplacement du robot, commandé de façon classique, vers une position appropriée à la localisation d'un des pare-brise, puis la localisation de ce pare-brise par le procédé de localisation des contrastes selon l'invention, par observation de quatre zones à contraste présentées par le pare-brise par deux têtes optiques associées au même dispositif d'acquisition et de traitement d'image et embarquées sur le robot. Le cycle comprend ensuite la saisie du pare-brise par le robot. Les étapes suivantes sont le déplacement du robot vers une position appropriée à la localisation d'un des cadres, puis la localisation de ce cadre par le procédé de localisation des reliefs suivant l'invention, par observation de quatre zones à relief présentées par le cadre par les deux mêmes têtes optiques. Enfin, le cycle comprend la mise en place du pare-brise sur le cadre par le robot. Il est avantageusement prévu que les moyens de commande du robot intègrent des moyens de mémorisation des coordonnées de localisation déterminées par le dispositif suivant l'invention.

Ce procédé général d'assemblage de pièces dans une chaîne de montage intègre ainsi, à deux stades distincts d'un process général par ailleurs classique pour tout ce qui concerne les déplacements et autres actions du robot, deux formes de mise en oeuvre différentes du procédé de localisation suivant l'invention.

L'invention sera maintenant plus complètement décrite dans le cadre de caractéristiques préférées et de leurs avantages, en faisant référence aux figures 1 à 5 dans lesquelles :
- la figure 1 représente une vue schématique d'une partie d'une chaîne de montage automobile au sein de laquelle est appliqué le procédé suivant l'invention ;
- la figure 2 représente une vue de dessus illustrant une mise en oeuvre du procédé suivant l'invention, pour la localisation d'un relief du cadre de la voiture, par la projection d'un motif de lumière structurée, le couvercle de la tête optique ayant été ôté ;
- la figure 3 illustre les zones de mesure sélectionnées pour le cadre de la voiture ;
- la figure 4 illustre l'image perçue par une caméra d'une série de traits lasers déformés au niveau d'un relief au profil franc ;
- et la figure 5 illustre l'image perçue par une caméra d'une série de traits lasers déformés au niveau d'un relief au profil émoussé.

L'exemple de réalisation préféré de l'invention décrit ici correspond à un des cas les plus complexes à mettre en oeuvre, où plusieurs mesures sont à effectuer sur plusieurs pièces différentes, afin de guider un robot pour mener à bien une opération dans une chaîne de montage de l'industrie automobile. Pour ce faire, plusieurs têtes optiques sont embarquées sur le robot.

L'étape de montage concernée est la pose d'un pare-brise sur une voiture. Comme il est fréquent dans ce type d'application, les positions du pare-brise et du cadre de la voiture destiné à le recevoir ne sont pas connues de façon précise, mais approximativement à plus ou moins environ 1 cm dans toutes les directions. De même, leurs dimensions varient légèrement d'une pièce à l'autre. Ainsi, le robot ne dispose d'aucune information fixe sur la position des pièces dans l'espace, ni sur leurs dimensions. Les seules données prédéterminées concernent la forme du pare-brise et du cadre de la voiture.

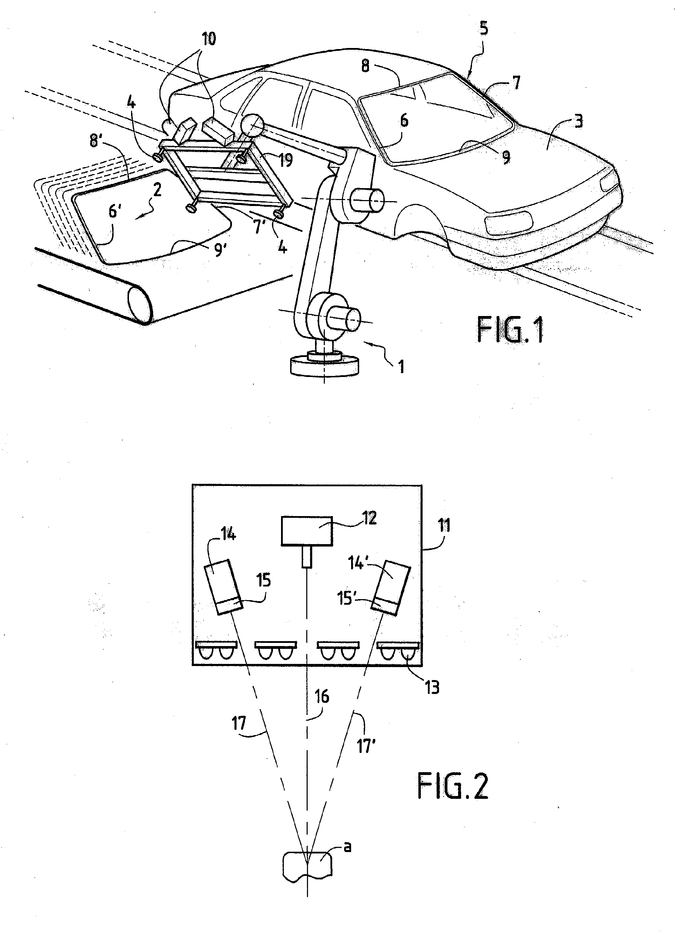

La figure 1 représente une vue schématique de la partie de la chaîne de montage au sein de laquelle est utilisée l'invention.

Un robot 1 doit poser un pare-brise 2 sur une voiture 3. Les déplacements du robot 1 sont commandés de façon classique par des processeurs programmés à cet effet.

Le robot 1 est articulé. Il présente notamment quatre axes d'articulation. Il porte une armature rectangulaire 19 qui est munie de quatre ventouses 4 pour la préhension du pare-brise.

La voiture 3 comporte un cadre 5, creux et de forme rectangulaire, qui est destiné à recevoir le pare-brise. Ce cadre est délimité par deux montants 6 et 7 et deux traverses, une traverse supérieure 8 et une traverse inférieure 9. La voiture 2 est amenée au robot 1 par un convoyeur.

Le pare-brise 2 arrive au niveau du robot 1 également porté par un convoyeur. Il présente une forme générale rectangulaire, de dimensions environ égales à celles du cadre 5. ll est délimité par des contours latéraux 6' et 7', et longitudinaux 8' et 9'.

Le robot est équipé d'un dispositif de visiométrie, qui comporte deux têtes optiques embarquées sur le robot, notamment portées par l'armature 19, et un dispositif d'acquisition et traitement d'image, ou calculateur, qui leur est associé, pour lui permettre de localiser avec exactitude le pare-brise 2 d'une part et le cadre 5 de la voiture destiné à recevoir le pare-brise 2 d'autre part. Le calculateur du dispositif de visiométrie et les processeurs commandant le robot 1 communiquent en permanence l'un avec l'autre. De plus, les dimensions du pare-brise 2 et de la voiture 3 étant légèrement variables en fonction de chaque pièce, le dispositif de visiométrie a également pour rôle de déterminer les dimensions exactes du cadre 5 et du pare-brise 2, afin que le robot 1 puisse poser le pare-brise 2 dans une position centrée par rapport au cadre 5, permettant d'obtenir un effet esthétique optimal.

Une tête optique 10 est illustrée sur la figure 2.

Ses différents éléments sont inclus dans un boîtier 11 qui est compact et de petite taille. La tête 10 est représentée vue de dessus, le couvercle du boîtier 11 ayant été retiré, pour montrer les différents composants internes de la tête.

Le boîtier 11 contient une source de lumière géométriquement structurée 12, qui est de préférence une source de lumière laser, qui permet de localiser les reliefs d'un objet. D'autres sources de lumière géométriquement structurée, comme par exemple une grille éclairée, peuvent également être utilisées.

La source laser émet un motif de lumière 16 déterminé.

Dans des modes de réalisation préférés de l'invention, le motif de lumière structurée est une série de traits rectilignes parallèles, notamment constituée de 5 à 11 traits. La précision de la mesure sera d'autant meilleure que le nombre de traits sera important. Dans un mode de réalisation préféré de l'invention, il est égal à 9.

On peut par ailleurs tout aussi bien envisager, dans le cadre de l'invention, d'utiliser un motif de lumière structurée différent, tel par exemple qu'une grille.

De façon tout à fait avantageuse, la tête comprend également une source de lumière diffuse 13. Elle peut ainsi également être utilisée pour l'analyse des contrastes sur un objet.

Une telle source de lumière diffuse 13 trouve maintes applications dans les chaînes de fabrication industrielles. Un exemple d'utilisation consiste notamment à rechercher dans une pièce un trou de passage. Eclairé par la lumière diffuse, le trou apparaît plus sombre alors que le reste de la pièce est plus lumineux.

Dans des modes de réalisation préférés de l'invention, la source de lumière diffuse 13 est une matrice de diodes à émission de lumière, répartie sur toute la face avant du boîtier 11. Celles-ci présentent l'avantage de ne pas vieillir, de s'allumer et de s'éteindre rapidement, et d'émettre une lumière quasi-monochromatique. Le nombre et la puissance des diodes est variable en fonction des besoins de l'application. Toute autre source de lumière diffuse peut également être utilisée dans le cadre de l'invention, notamment un éclairage halogène.

Suivant les besoins de l'application, l'une ou l'autre des deux sources de lumière, lumière géométriquement structurée 12 ou lumière diffuse 13, est utilisée.

Deux capteurs optiques, ou caméras, 14 et 14' sont également situés à l'intérieur du boîtier. Ils peuvent être indifféremment analogiques ou numériques.

Ces deux caméras permettent, utilisées de façon simultanée, d'observer une même cible sous deux directions d'observation différentes, et d'obtenir de cette sorte deux groupes d'informations concernant cette cible. A partir des deux vues planes obtenues par les deux caméras, le calculateur qui leur est associé peut reconstituer un espace tridimensionnel, suivant le principe même de la stéréoscopie.

Un filtre optique 15, 15' est placé en avant de chacune des caméras 14, 14'. Chacun de ces filtres possède une bande passante étroite encadrant la longueur d'onde de la lumière laser, de manière à éliminer tous les signaux lumineux de longueurs d'onde différentes, notamment les perturbations dues à l'éclairage ambiant. De façon tout à fait avantageuse, les diodes 13 sont choisies de manière à émettre dans la même gamme de longueur d'onde que la lumière laser 12, de telle sorte que le filtre 15, 15' laisse passer de la même façon la lumière réfléchie par l'objet, qu'elle ait été émise par la source laser 12 ou par les diodes 13. Dans des modes de réalisation préférés de l'invention, la source laser 12, qui est monochromatique, et les diodes 13, qui le sont quasiment, émettent une lumière rouge, de longueur d'onde proche de 700 nm, et les filtres laissent passer uniquement la lumière autour de cette longueur d'onde. Ceci permet tout à fait avantageusement d'améliorer le contraste par rapport à l'éclairage ambiant.

Le boîtier 11 comporte des parois opaques. Il est pourvu de plusieurs fenêtres transparentes, qui permettent d'une part la projection de la lumière, et d'autre part l'observation par les caméras.

La mise en oeuvre du procédé suivant l'invention va maintenant être détaillée dans le cas d'application préféré décrit ici.

Afin de déterminer avec exactitude à la fois les positions et les dimensions respectives du pare-brise 2 et du cadre 5 de la voiture, plusieurs mesures doivent être effectuées pour chacun d'eux. Dans ce cas particulier, à cause de la possible variation de dimension de chaque pièce, il est nécessaire de localiser au minimum trois de ses parties distinctives, prédéterminées d'après la forme connue de la pièce. La localisation dans l'espace de deux de ces parties seulement serait en effet insuffisante, et laisserait une incertitude sur la position de la pièce.

Des mesures sont ainsi effectuées sur trois zones différentes de chaque pièce. Afin d'obtenir une meilleure précision sur la détermination de la position et de la dimension de la pièce, on réalise un total de quatre mesures par pièce, sur quatre zones différentes. Ces quatre mesures sont effectuées au moyen des deux têtes 10 portées par le robot. Chaque tête 10 effectue ainsi deux mesures, à deux endroits distincts de chaque pièce. Après la première série de mesures, qui est réalisée de façon simultanée par chacune des têtes 10, le robot 1 déplace les têtes 10 pour les positionner de manière adéquate pour la deuxième série de mesures.

Cependant, on peut également envisager d'utiliser, pour cette application ou pour toute autre, des têtes placées en position fixe. Ici, il serait alors nécessaire de disposer de quatre têtes fixes qui effectueraient chacune une mesure, et ce pour chacun du pare-brise et du cadre de la voiture. Cela représenterait en tout huit têtes différentes, au lieu de deux têtes montées en mode dynamique comme dans l'exemple décrit ici. Il serait également possible dans le cadre de l'invention d'utiliser une seule tête montée sur un robot pour toutes les mesures.

Le choix d'utiliser des têtes optiques en position fixe ou mobile repose principalement, pour chaque application, sur des critères d'ordre économique. Si un grand nombre de mesures est nécessaire, en utilisant un nombre moins important de têtes, qui seront embarquées sur un robot, on réalise l'économie financière de l'achat de plusieurs têtes. En pratique, on observe également dans ce cas un gain en matière de souplesse d'utilisation. Il peut en revanche être avantageux de ne pas limiter à l'extrême le nombre de têtes embarquées sur le robot, afin de limiter les mouvements de ce dernier, et donc de gagner du temps de cycle. A l'inverse, pour d'autres applications nécessitant un nombre bien plus restreint de mesures, l'utilisation de têtes fixes sera privilégié, ce qui permettra de simplifier les calculs à effectuer dans les étapes de traitement du signal.

Ainsi, le mode d'utilisation des têtes optiques est entièrement dépendant de l'application donnée, et toutes les possibilités peuvent être envisagées dans le cadre de l'invention. La position de l'objet est dans un cas déterminée par rapport à un repère fixe, et dans l'autre par rapport à un repère propre au robot.

Afin de localiser de la façon la plus précise chacune des pièces, il est tout d'abord nécessaire de choisir quel mode d'éclairage utiliser, en fonction des caractéristiques de la pièce.

La zone sur laquelle est projeté le motif de lumière géométriquement structurée doit également être choisie. Conformément à ce qui est préconisé dans le cadre de l'invention, les mesures sont réalisées sur des zones particulières de la pièce, qui présentent un relief ou un contraste.

Dans l'exemple préféré du montage d'un pare-brise sur une voiture, on distingue deux configurations différentes.

Le cadre 5 de la voiture 3 comportant des montants et des traverses présentant tous des arêtes, il est particulièrement approprié dans son cas d'utiliser la source de lumière structurée, qui permet la localisation des reliefs.

Par contre, une lumière du type laser est totalement inadaptée à l'éclairage d'une surface en verre, à cause de la réflexion multiple des traits de lumière par cette matière. On utilisera donc préférentiellement l'éclairage par lumière diffuse pour localiser le pare-brise. Les quatre zones sur lesquelles seront effectuées les mesures seront alors variables en fonction du type de pare-brise. En règle générale, les contours des pare-brise sont bordés d'une bande de sérigraphie noire, destinée à camoufler le joint de colle utilisé pour sa fixation sur la voiture. Cette bande crée un contraste lumineux sur le pare-brise sous éclairage par lumière diffuse, contraste qui peut être utilisé avantageusement pour la localisation du pare-brise par le procédé suivant l'invention.

De façon tout à fait avantageuse, les mêmes deux têtes optiques 10 serviront donc à localiser d'une part le pare-brise 2 et d'autre part le cadre 5, par deux moyens différents intégrés l'un et l'autre dans chacune des têtes.

En ce qui concerne la localisation du cadre 5 de la voiture, quatre mesures sont réalisées sur quatre zones différentes. Etant donné la géométrie du cadre 5, il est particulièrement avantageux de choisir pour ces mesures des zones présentant un relief au profil franc, droit et constant sur une longueur d'environ 5 cm. Cette longueur tient compte de la largeur du motif de lumière laser, qui est comprise, pour un motif formé de 5 à 11 traits, entre 2 et 3 cm. A cette largeur vient s'ajouter l'incertitude sur la position de la pièce, qui peut aller dans un sens ou dans l'autre jusqu'à 1 cm. La mesure sur de tels reliefs présente l'intérêt de nécessiter des calculs relativement simples pour le traitement des signaux observés.

Cependant, tous types de reliefs peuvent être sélectionnés dans le cadre de l'invention, notamment les arêtes courbes et/ou émoussées. Les calculs impliqués pour le traitement du signal seront alors différents, et adaptés à la configuration particulière du relief.

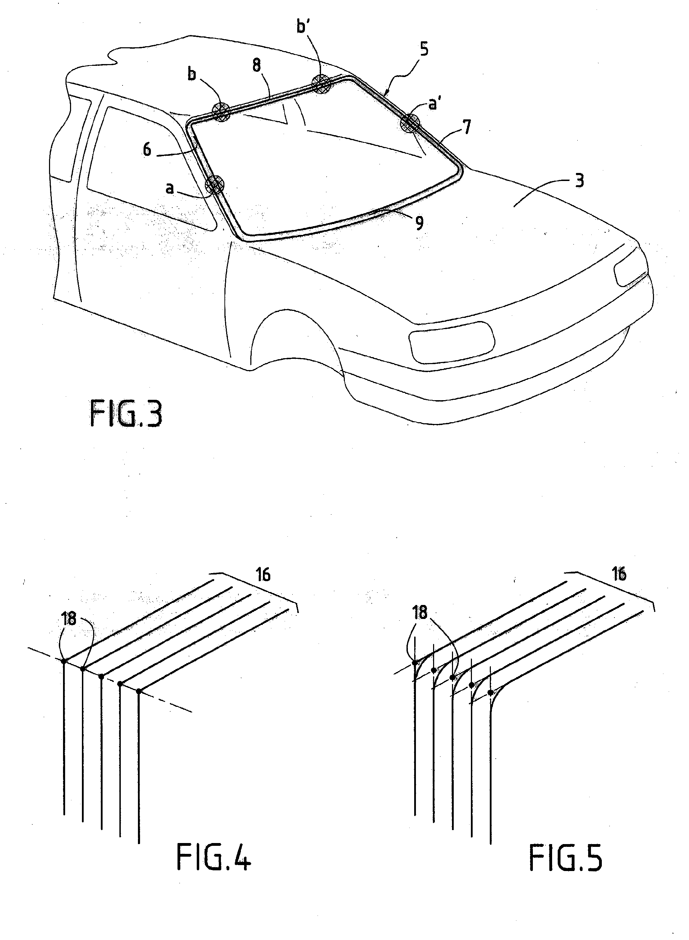

Sur le cadre de la voiture, les zones de mesure a, a' et b, b' représentées sur la figure 3 sont choisies respectivement sur le montant 6, le montant 7 et la traverse supérieure 8. Ces zones remplissent les critères précités.

La figure 2 illustre la mesure sur une zone particulière du cadre 5 de la voiture 3, à partir d'une tête optique 10.

Un motif de lumière structurée 16, notamment constitué de 5 traits, est projeté par la source laser 12 suivant une direction prédéterminée vers la zone a du cadre de la voiture, dans laquelle on sait, d'après la position approximative connue de la pièce, que va se trouver un relief. Le motif de lumière est dirigé transversalement au profil du relief.

La tête 10 est avantageusement conçue, positionnée et orientée de telle manière que pour chaque point de la zone de travail, l'angle α entre les axes de vue 17, 17' des deux caméras et la distance de travail permettent d'obtenir le meilleur compromis entre précision et facilité d'emploi. Aux extrêmes, une distance à l'objet importante, qui impliquera un angle étroit entre les axes de vue des deux caméras, donnera une forte imprécision sur la coordonnée de profondeur mesurée. A l'inverse, dans le cas d'une observation de près avec un angle large, il sera difficile d'obtenir un éclairage équivalent sur toute la zone sur laquelle sera projetée la lumière laser.

Dans des modes de réalisation préférés de l'invention, la distance de travail est comprise entre 10 et 50 cm, et l'angle entre les axes de vue des deux caméras est compris entre 10 et 50 degrés. Il est notamment égal à 30 degrés.

De plus, l'angle entre la direction de projection de la lumière laser et le plan d'observation des caméras est avantageusement égal à 90 degrés, de manière à obtenir une mesure précise pour la majorité des configurations des objets à localiser. Cependant, il peut être avantageux dans le cadre de l'invention d'équiper la tête optique de deux sources de lumière géométriquement structurée, de telle sorte qu'on projette un motif de lumière géométriquement structurée en sélectionnant soit l'une soit l'autre de deux directions de projection d'inclinaisons différentes prédéterminées, chacune de ces directions formant notamment un angle de plus ou moins 45 degrés avec le plan d'observation des capteurs optiques 14, 14'. Suivant le profil et la position du relief à localiser, l'une ou l'autre de ces deux sources est utilisée. On s'assure ainsi de pouvoir réaliser une mesure fiable quelles que soient les conditions de travail. Une autre alternative parfaitement envisageable dans le cadre de l'invention est, comme il a été dit plus haut, d'utiliser une grille laser, qui présente cependant les inconvénients d'être coûteuse à générer et d'entraîner une plus grande complexité de traitement du signal. Une autre solution est encore d'utiliser un système constitué de miroirs situés sur le trajet de la lumière laser et de position et d'inclinaison réglables, permettant ainsi de contrôler à volonté la structure et la direction de projection de la lumière.

Les traits laser, émis rectilignes, subissent une déformation au contact de l'objet. La lumière est réfléchie par l'objet, et les deux caméras 14, 14' observent, chacune suivant un angle de vue différent, le motif de lumière réfléchi. Chaque arête de l'objet se trouvant sur le trajet des traits laser 16 induit une déformation de ces traits. Au niveau de l'arête sélectionnée pour la localisation, les traits 16 subissent ainsi un brusque changement de direction se traduisant pour chacun par un point de déformation 18 sur chacune des images. L'image perçue par une des caméras 14 est représentée sur la figure 4.

Les caméras 14, 14' enregistrent l'image déformée du motif de lumière réfléchi par le cadre 5, et transmettent ces informations au calculateur. Le calculateur analyse les signaux transmis par chacune des caméras, et identifie, pour chaque trait, un point de déformation 18 correspondant à l'arête de l'objet. Il trace ensuite un vecteur passant par les cinq points 18 ainsi déterminés. Ce vecteur constitue un marquage de l'arête analysée. Dans les cas d'application décrit ici, ce vecteur est une ligne droite. Suivant le profil de l'arête, il peut également s'agir d'un vecteur circulaire.

Dans le cas d'un objet présentant plusieurs arêtes différentes, le calculateur utilise des critères de sélection prédéterminés pour sélectionner le point de déformation 18 adéquat. Ces critères peuvent être une direction prédéterminée du changement de direction, un valeur angulaire de la déformation comparée à une valeur de référence, ou, si cela est approprié, la vérification que les cinq points 18 appartiennent bien à une même ligne droite. Ce dernier critère permet si besoin est d'éliminer un point incohérent par rapport aux autres. Cette opération engendre peu de perte de précision, à partir du moment où on dispose toujours d'au moins trois points pour tracer le vecteur qui marquera l'arête.

Dans le cas d'un relief au profil plutôt émoussé, la déformation de chaque trait n'est pas brusque mais prend une forme courbe. Le point de déformation 18 est alors assimilé à l'intersection des deux tangentes à cette courbe, comme indiqué sur la figure 5.

Une fois que le vecteur marquant l'arête a été tracé, le calculateur détermine sa position dans un référentiel 3D propre à la tête 10, en combinant les données issues de chacune des caméras 14, 14'.

La même opération est réalisée simultanément au moyen de l'autre tête optique 10 portée par le robot 1 sur une autre des zones de mesure, par exemple la zone b. Le robot déplace ensuite les têtes 10 pour effectuer la localisation par le même procédé des deux zones restantes a', b', observée chacune par une des deux têtes 10. Ceci permet de déterminer avec exactitude à la fois la position et les dimensions du cadre 5 de la voiture 3.

La mise en oeuvre du procédé est similaire pour la localisation des quatre zones à contraste du pare-brise, à la seule différence que c'est la source de lumière diffuse 13 qui est cette fois utilisée.

L'éclairage par lumière diffuse peut également avantageusement être utilisé dans bien d'autres applications, par exemple pour la localisation d'un trou de passage dans une pièce. Pour le cas d'un trou en forme de cercle par exemple, chaque caméra 14, 14' enregistre l'image d'une ellipse sombre. Le calculateur détermine la position dans l'espace du centre de chacune des ellipses, et en combinant les deux données, il en déduit la position dans l'espace du centre du trou circulaire.

Chacune des têtes 10 possède son référentiel propre XYZ. De façon tout à fait avantageuse, le fait que les deux caméras 14, 14' soient placées dans le même boîtier 11 permet qu'elles puissent être utilisées commodément en mode dynamique (facilité de déplacement). De plus, la calibration des deux caméras 14, 14', de façon à mettre en commun leurs systèmes de repère, est réalisée en usine, en amont de la livraison. Il suffit ensuite uniquement d'étalonner la tête 10 sur le lieu d'utilisation, en fonction de l'application spécifique pour laquelle elle est destinée. Ce dispositif présente ainsi une grande souplesse d'utilisation, la précision des mesures est améliorée car la calibration de la tête 10 est plus fiable, et l'étape d'étalonnage nécessaire avant chaque utilisation différente est facilitée.

Le système de référence attaché à chaque tête 10 bouge en même temps qu'elle. Le robot 1 possède quant à lui son propre système de référence fixé au sol.

Afin de permettre au robot 1 d'effectuer sa tâche de montage, les données issues de chaque tête 10, qui sont exprimées par rapport au référentiel de la tête 10, sont communiquées à ses moyens de commande. Il est nécessaire au préalable de soumettre le robot 1 à un apprentissage, afin de mettre en correspondance son référentiel propre et celui de chacune des deux têtes 10. L'apprentissage est réalisé de façon classique, identique à celui des robots dont le rôle est de manier un outil. Le robot 1 est équipé pour cela d'autant de repères outil que de têtes 10 embarquées. Une mire comportant trois cibles formant la base d'un système de repère est utilisée.

Pour chacune des têtes, l'apprentissage est globalement réalisé de la façon suivante. Il a pour finalité que le robot 1 et ses moyens de commande, et la tête optique 10 et son calculateur associé apprennent un même espace commun, qui est celui défini par la mire.

La tête 10 est assimilée à une pointe virtuelle pour le robot 1. Un opérateur déplace manuellement le robot 1 devant la mire jusqu'à ce que cette pointe virtuelle donne la position 0,0,0 du centre de la zone de travail. Cette opération est répétée en prenant trois ou quatre directions différentes d'approche de la pointe vers la mire. La pointe virtuelle apprend ensuite de la même façon la position des deux autres cibles de la mire, de telle sorte que le robot 1 connaît, au terme de ces étapes, l'espace défini par la mire.

La tête optique 10 est ensuite positionnée devant la même mire, dans une position définie comme sa position de référence, qui correspond à la position 0,0,0 de la mire. Elle est ensuite déplacée de façon à apprendre la position des deux autres points de la mire, qui définissent, avec le point 0,0,0, l'espace tridimensionnel de la mire.

Le dispositif de visiométrie et le robot 1 sont alors capables de travailler dans le même espace qu'ils ont tous deux appris de la mire.

Une opération identique est réalisée pour chacune des deux têtes 10. Cette procédure peut être effectuée pour autant de têtes 10 qu'il est nécessaire pour les besoins de l'application.

Au terme de l'apprentissage, le robot 1 est capable de comprendre les coordonnées provenant de la tête 10, qui sont données dans un référentiel qu'il partage avec elle.

Il peut ainsi connaître les positions et dimensions du pare-brise 2 et du cadre 5 de la voiture déterminées par le calculateur. Il est alors capable, commandé de façon classique, de saisir le pare-brise 2 au moyen de ses ventouses 4, et de le poser en position centrée sur le cadre 5 de la voiture.

Pour chaque tête optique 10, le système de traitement du signal impliqué par le procédé suivant l'invention peut être schématiquement résumé comme suit.

Pour chaque point de la zone de mesure, l'image observée par chacune des caméras 14, 14' permet de générer deux coordonnées de position. Par combinaison des deux images, on obtient donc quatre coordonnées de position pour chaque point, alors que trois seulement sont nécessaires à sa localisation. L'invention tire avantageusement profit de cette redondance d'informations pour proposer un procédé de localisation fiable et précis.

Dans le cas le plus simple où un seul trait laser est projeté sur la zone de mesure, pour chaque point individuel du trait laser qui se trouve dans la zone d'observation des caméras, notamment pour le point de déformation 18 situé au niveau de l'arête, sont obtenus deux couples de coordonnées, notés par exemple (x, y) et (x', y'). Ces deux couples peuvent être combinés de plusieurs façons différentes, de façon à générer des triplets de coordonnées qui donnent la position du point dans l'espace. Deux de ces triplets sont considérés, par exemple les triplets (x, y, x') et (x', y', x). La coïncidence des résultats obtenus pour la localisation du point par chacun de ces deux jeux de coordonnées permet de déterminer qu'il y a concordance des deux images captées par les deux caméras 14, 14' sur le trait laser, et donc de valider les coordonnées spatiales ainsi obtenues en tant que coordonnées de localisation fiables de l'objet. Un valeur seuil prédéterminée est utilisée pour juger s'il y a ou pas coïncidence entre les deux jeux de coordonnées spatiales.

Il est plus avantageux, comme préconisé par l'invention, d'utiliser pour la localisation une série de plusieurs traits laser, qui permet d'obtenir des informations plus riches et plus précises, puisque ce n'est plus un point de déformation qui va permettre la localisation, mais un vecteur joignant un ensemble de tels points. Cependant, ceci peut constituer une source d'erreur dans le cas où un des traits de la série est manquant sur les images, par exemple parce qu'il a été projeté à côté de la zone de mesure, ce qui est tout à fait possible en raison de l'incertitude de position de l'objet. ll peut également arriver, suivant le profil du relief et son orientation par rapport à la direction de projection de la lumière et aux directions d'observation des caméras, qu'un trait soit manquant sur une image, et pas sur l'autre. Dans ces cas, il est alors difficile de déterminer lequel des traits est manquant, et il subsiste une incertitude sur la position de l'objet.

En cela, le procédé suivant l'invention est particulièrement avantageux, puisqu'il utilise la redondance d'informations générée par l'emploi de deux caméras, pour gérer au mieux une pluralité de traits.

Ainsi, chacun des traits observés par une des caméras, par un traitement réalisé comme il vient d'être décrit, est comparé un à un aux traits observés par l'autre, afin de trouver celui qui lui correspond. Une méthode itérative est ainsi appliquée trait après trait, jusqu'à s'assurer d'une concordance des deux images l'une avec l'autre sur un nombre maximal de traits. On est alors sûr de la précision de la localisation, puisqu'elle a été réalisée à partir d'une pluralité de traits, et de sa fiabilité, puisqu'elle a été validée par une redondance d'informations.

En outre, l'invention assure avantageusement que même si un ou plusieurs traits manquent sur les images, il reste toujours suffisamment de traits sur lesquels peut être exploitée la redondance d'informations, et qui peuvent donc être mis en correspondance sur chacune des deux images, pour obtenir une localisation à la fois précise et fiable.

Un système de traitement du signal similaire est réalisé quelle que soit la forme du motif de lumière géométriquement structurée 16 utilisé.

Le système de traitement des signaux est également sensiblement identique pour l'analyse des contrastes à partir d'un éclairage par lumière diffuse.

La description qui précède explique clairement comment l'invention permet d'atteindre les objectifs qu'elle s'est fixés. En particulier, elle propose un procédé et un dispositif particulièrement adaptés à la localisation et à la détermination de la dimension de pièces de tous types dans les chaînes de montage automatisées. Le procédé et le dispositif suivant l'invention répondent avantageusement aux soucis d'efficacité et de rendement économique prépondérants dans de telles industries. Ils exploitent les redondances d'information dont on dispose à partir de deux images captées sous des angles différents d'un même motif de lumière structurée projetée pour examiner dans quelle mesure il y a coïncidence. Ce n'est alors que si le degré de cohérence entre les deux images respecte des exigences prédéterminées que l'on valide les informations de coordonnées tridimensionnelles calculées à partir de ces images. Si la concordance est insuffisante, on peut interrompre le processus automatisé de traitement de la pièce en cours, et dans l'application particulière précédente, on évite de procéder au collage définitif d'un pare-brise qui ne serait pas conforme ou qui ne présenterait pas correctement par rapport au cadre récepteur. De manière plus générale, il vaut mieux ne pas traiter une pièce pour laquelle la cohérence des informations de position n'est pas suffisante, plutôt que de prendre le risque d'un choc entre le préhenseur du robot et la pièce.

Il ressort néanmoins de ce qui précède que l'invention n'est pas limitée aux modes de mise en oeuvre qui ont été spécifiquement décrits et représentés sur les figures et qu'elle s'étend au contraire à toute variante passant par le biais de moyens équivalents.

A ce sujet, on s'est intéressé particulièrement au cas d'un motif de lumière qui est fait d'une série de traits, préférentiellement de traits rectilignes dont on repère la déformation qu'un relief de la pièce examinée provoque sur chaque image captée. Mais l'invention s'appliquerait de manière similaire en utilisant une lumière structurée faite de points. Dans certains cas d'application, un trait peut avantageusement être remplacé par une série de points. Les calculs de traitement des informations collectées est alors plus simple que dans le cas des traits, mais on perd la densité d'information qu'impliquent les traits par rapport aux points.

Dans tous les cas la vérification de concordance réalisée non pas pour un seul point, mais pour plusieurs points des images captées à partir du même motif projeté permet à l'opérateur de décider si le montage est valide ou non. Ceci se complète avantageusement par un examen du degré de cohérence par appariement deux images captées. Si tous les éléments (traits ou points) du motif de lumière projeté sont visibles de chaque caméra, le traitement comparatif des images captées considère les éléments les uns après les autres. Si les éléments ne sont pas tous visibles par chaque caméra, on commence par apparier les éléments vus par chacune.

Dans certaines circonstances, l'analyse image par image des éléments permet d'y reconnaître un élément géométrique de l'objet, sans ambiguïté. C'est le cas par exemple quand tous les traits sont visibles là où ils se terminent au bord d'une tôle ou là où ils dessinent un trait courbe sur le même pli de tôle.

Une première étape consiste alors à extraire de chaque image les coordonnées en deux dimensions de cet élément géométrique de l'objet (droite, ellipse, cercle, ou autre), puis une deuxième étape consiste à calculer les coordonnées en trois dimensions de cet objet (calcul stéréoscopique classique entre deux points ou deux droites). Disposant ainsi d'une bonne estimation de la position tridimensionnelle de cet élément géométrique, il est possible de revenir aux coordonnées des éléments lumineux dans les images et de les apparier en utilisant une méthode itérative tenant compte de diverses contraintes, parmi lesquelles on peut choisir notamment : une bonne concordance entre les éléments des deux caméras, une bonne concordance des coordonnées trimensionnelles par rapport aux coordonnées de l'élément géométrique calculé précédement, le respect de l'ordonnancement des éléments lumineux, par exemple le respect de l'ordre de succession des traits ou des points.

Quand au contraire l'appariement préalable entre les éléments visbles, qui peuvent être différents d'une image captée à l'autre, est nécessaire, cet appariement peut être effectué par exemple par une méthode itérative qui examine les différentes combinaisons possibles d'appariement des éléments des deux images, en respectant les contraintes suivantes : une bonne concordance entre les éléments des deux caméras, le respect de l'ordonnancement des éléments lumineux, c'est-à-dire notamment le respect de l'ordre de succession des traits ou des points.

Dans les cas le principe à la base de cet appariement, ou vérification de concordance, est d'examiner, pour chaque combinaison possible, la cohérence des informations, et de déterminer pour quelle combinaison on a une cohérence forte en vérifiant que pour toutes les autres combinaisons on observe une cohérence beaucoup moins forte.

Dans tous les cas également, il est possible d'ajouter d'autres contraintes, par exemple la distance estimée entre caméra et objet, ou des hypothèses sur les formes de l'objet. Et de manière générale, l'appariement est plus facile quand il y a une moindre densité d'éléments lumineux à traiter dans chaque image. C'est ainsi que le motif de lumière structuré projeté est préférentiellement constitué d'une pluralité d'éléments distincts tels que des traits ou des séries de points.

Une technique complémentaire, particulièrement avantageuse dans le cas d'une projection de points, consiste à mémoriser les coordonnées des éléments lumineux pendant une phase d'étalonnage, préalablement à la mise en oeuvre du capteur. Pendant l'étape d'appariement, il est possible ainsi d'ajouter comme contrainte que les coordonnées des points trouvés doivent correspondre effectivement aux coordonnées d'un élément lumineux appris. Cette méthode peut être utilisée avec tout type d'éléments lumineux (points, traits, ou autres), mais elle est plus simple dans le cas des points, car il suffit de mémoriser pour chaque point la coordonnée de la droite du faisceau qui dessine ce point lumineux. Pour les traits, les techniques de projection n'étant pas parfaites, les traits projetés ne sont généralement pas assimilables à des droites, mais à des courbes. Le faisceau lumineux ne peut donc pas être considéré comme un plan, mais comme une surface courbe, ce qui complique les calculs et augmente le temps de traitement.

## Revendications

1. Procédé de localisation d'un objet dans un espace tridimensionnel, **caractérisé en ce que** :
- on projette un motif (16) de lumière géométriquement structurée en direction d'une zone à relief (a) dudit objet, suivant une direction de projection transversale au profil dudit relief,
- on capte deux images dudit motif (16) en détectant la lumière réfléchie par ledit objet suivant deux directions d'observation différemment inclinées par rapport à ladite direction de projection dudit motif,
- on repère sur chacune desdites images captées un élément caractéristique dudit relief se traduisant par une déformation dudit motif (16) sur ladite image,
- et on vérifie qu'il y a concordance entre lesdites images captées sur au moins une partie dudit motif (16), et dans l'affirmative on valide les coordonnées spatiales dudit élément caractéristique calculées à partir desdites deux images captées en tant que coordonnées de localisation dudit objet.

2. Procédé de localisation selon la revendication 1, **caractérisé en ce que** ledit motif est constitué d'une pluralité d'éléments distincts tels que des traits ou des séries de points et **en ce qu'**on examine si on retrouve le même nombre d'éléments sur chacune desdites deux images captées, et dans l'affirmative on décide qu'il y a concordance entre lesdites deux images captées sur la totalité dudit motif, et dans le cas contraire on examine s'il y a concordance sur au moins une partie dudit motif, et on vérifie si le degré de cohérence entre leux images respecte des contraintes prédéterminées.

3. Procédé de localisation selon la revendication 1 ou 2, **caractérisé en ce que** pour au moins un trait constitutif dudit motif (16), donnant lieu à un point de déformation (18) caractéristique dudit relief sur chacune desdites deux images, on décide qu'il y a concordance entre lesdites deux images lorsque deux jeux différents de coordonnées spatiales dudit point de déformation (18) calculés à partir desdites deux images sont coïncidents, et on valide alors lesdites coordonnées spatiales en tant que coordonnées de localisation dudit objet.

4. Procédé de localisation selon l'une quelconque des revendications 1 à 3, **caractérisé en ce que** ledit motif (16) est constitué d'une pluralité de traits donnant lieu à une pluralité de points de déformation (18) caractéristiques dudit relief sur chacune desdites images, et **en ce qu'**on décide qu'il y a concordance entre lesdites images lorsque pour plusieurs desdits points (18) deux jeux différents de coordonnées spatiales calculés à partir desdites deux images sont coïncidents, et on valide alors en tant que coordonnées de localisation dudit objet les coordonnées spatiales des points pour lesquels lesdits deux jeux sont coïncidents.

5. Procédé de localisation selon l'une quelconque des revendications 1 à 4, **caractérisé en ce que** ledit motif de lumière structurée (16) est une série de traits rectilignes parallèles, notamment constituée de 5 à 11 traits.

6. Procédé de localisation selon l'une quelconque des revendications 1 à 5, **caractérisé en ce qu'**on projette un motif de lumière géométriquement structurée (16) en sélectionnant soit l'une soit l'autre de deux directions de projection d'inclinaisons différentes prédéterminées.

7. Procédé de localisation selon l'une quelconque des revendications 1 à 6, **caractérisé en ce que** d'autre part :
- on éclaire une zone à contraste dudit objet par une lumière diffuse,
- on capte deux images différentes de ladite zone à contraste en détectant la lumière réfléchie par ledit objet suivant deux directions d'observation différentes,
- et on détermine à partir des deux images captées la localisation dudit contraste.

8. Dispositif pour la localisation d'un objet dans un espace tridimensionnel, **caractérisé en ce qu'**il comporte au moins une tête optique (10) dans laquelle sont intégrés :
- une source (12) de lumière géométriquement structurée de longueur d'onde donnée pour projeter vers une zone à relief dudit objet un motif (16) de ladite lumière, suivant une direction de projection déterminée, notamment une source de lumière laser,
- deux capteurs optiques (14, 14') orientés suivant des directions d'observation inclinées chacune différemment par rapport à ladite direction de projection dudit motif de lumière structurée (16), pour capter deux images différentes dudit motif réfléchi par ledit objet,
- et deux filtres optiques (15, 15') placés chacun devant un desdits capteurs (14, 14') et présentant une bande passante étroite encadrant ladite longueur d'onde de ladite lumière structurée,
ladite tête optique (10) étant associée à un dispositif d'acquisition et de traitement d'image adapté pour repérer sur chacune desdites images captées un élément caractéristique dudit relief se traduisant par une déformation dudit motif (16) sur ladite image, pour vérifier la concordance entre lesdites images captées sur au moins une partie dudit motif (16), pour calculer les coordonnées spatiales dudit élément caractéristique à partir desdites deux images captées, et pour valider automatiquement lesdites coordonnées spatiales en tant que coordonnées de localisation dudit objet si le degré de cohérence entre les deux images captées respecte des contraintes prédéterminées.

9. Dispositif selon la revendication 8, **caractérisé en ce qu'**il comporte une pluralité de têtes optiques (10) associées au même dispositif d'acquisition et de traitement d'image.

10. Dispositif selon la revendication 8 ou 9, **caractérisé en ce que** ladite tête optique (10) comporte deux sources (12) différentes pour projeter un motif (16) de lumière géométriquement structurée suivant soit l'une soit l'autre de deux directions de projection d'inclinaisons différentes, chacune desdites deux directions formant notamment un angle de plus ou moins 45 degrés avec le plan d'observation desdits capteurs optiques (14, 14').

11. Dispositif selon l'une quelconque des revendications 8 à 10, **caractérisé en ce que** ladite tête optique (10) comporte en outre une source (13) de lumière diffuse, notamment une matrice de diodes.

12. Dispositif selon l'une quelconque des revendications 8 à 11, **caractérisé en ce qu'**il est associé à des moyens pour commander un robot (1) d'assemblage de pièces dans une chaîne de montage en série automatisée.

13. Procédé de localisation d'une pièce dans une chaîne de montage en série automatisée utilisant le dispositif selon la revendication 12, **caractérisé en ce que** ladite tête optique (10) est embarquée sur ledit robot d'assemblage de pièces (1).

14. Procédé de localisation selon la revendication 13, **caractérisé en ce qu'**on observe successivement, à chaque fois au moyen de deux têtes optiques (10) associées au même dispositif d'acquisition et de traitement d'image et embarquées sur ledit robot (1), deux groupes de deux zones à relief ((a, a'), (b, b')) ou optionnellement de zones à contraste présentées par ladite pièce et choisies de sorte que la localisation desdites zones permette d'obtenir suffisamment d'informations pour déterminer la position et les dimensions de ladite pièce.

15. Procédé de montage en série dans une chaîne automatisée de pare-brise (2) sur des cadres (5) de voitures (3), utilisant le dispositif selon la revendication 12, **caractérisé en ce qu'**il comporte la répétition successive du cycle d'étapes suivant :
- le déplacement dudit robot (1), commandé de façon classique, vers une position appropriée à la localisation d'un desdits pare-brise (2),
- la localisation dudit pare-brise (2) suivant le procédé selon la revendication 7, par observation de quatre zones à contraste présentées par ledit pare-brise (2) par deux têtes optiques (10) associées au même dispositif d'acquisition et de traitement d'image et embarquées sur ledit robot (1),
- la saisie dudit pare-brise (2) par ledit robot (1),
- le déplacement dudit robot (1) vers une position appropriée à la localisation d'un desdits cadres (5),
- la localisation dudit cadre (5) suivant le procédé selon l'une quelconque des revendications 1 à 6, par observation de quatre zones à relief (a, a', b, b') présentées par ledit cadre (5) par les deux mêmes têtes optiques (10),
- et la mise en place par ledit robot (1) dudit pare-brise (2) sur ledit cadre (5).
